# EUROPEAN PATENT APPLICATION

(11) **EP 4 607 811 A1**
(43) Date of publication of application: **27.08.2025**
(21) Application number: 23878929.1
(22) Date of filing: 26.09.2023
(51) Int. Cl.: H04B 7/0408, H04B 7/185

(54) **BEAM MEASUREMENT METHOD AND RELATED DEVICE**

(30) Priority: 21.10.2022 CN 202211296272
(71) Applicant: Huawei Technologies Co., Ltd., Shenzhen, Guangdong 518129 (CN)
(72) Inventor: FU, Xia, Shenzhen, Guangdong 518129 (CN); LI, Xianchi, Shenzhen, Guangdong 518129 (CN); JIN, Tao, Shenzhen, Guangdong 518129 (CN)
(74) Representative: Maiwald GmbH
(86) International application number: PCT/CN2023/121500
(87) International publication number: WO 2024/082936

(57) **Abstract**

This application discloses a beam measurement method and a related device, so that a terminal measures a beam of a neighboring cell only when the terminal is scanned by the beam, to avoid a waste of resources of the terminal. The method in this application includes: A first satellite base station obtains a measurement event, where the measurement event includes a target time period, the target time period is determined based on location information of a terminal, ephemeris information of a second satellite base station, and a beam scanning rule of the second satellite base station, and a target beam of the second satellite base station scans the terminal in the target time period. The first satellite base station sends the measurement event to the terminal, where the measurement event is used by the terminal for measuring the target beam in the target time period, and the first satellite base station is a serving satellite base station of the terminal.

## Description

This application claims priority to Chinese Patent Application No. CN202211296272.1, filed with the China National Intellectual Property Administration on October 21, 2022 and entitled "BEAM MEASUREMENT METHOD AND RELATED DEVICE", which is incorporated herein by reference in its entirety.

### TECHNICAL FIELD

This application relates to the field of satellite communication, and in particular, to a beam measurement method and a related device.

### BACKGROUND

As an effective way of global coverage, satellite communication is attracting wide attention and discussion from academia and enterprises. In satellite communication, because satellite base stations are always in a high-speed moving state, a terminal located on the ground needs to continuously switch an accessed satellite base station. The terminal needs to measure a beam of a neighboring satellite base station under an indication of a serving satellite base station. The terminal can switch to the neighboring satellite base station only when reference signal received power (reference signal received power, RSRP) of the beam of the neighboring satellite base station meets a preset condition.

In the conventional technology, to ensure that the beam of the neighboring satellite base station can be measured, the terminal needs to continuously perform measurement. However, in the foregoing process, the neighboring satellite base station does not always have a beam scanning the terminal. Consequently, a resource of the terminal is wasted.

### SUMMARY

This application provides a beam measurement method and a related device, so that a terminal measures a beam of a neighboring cell only when the terminal is scanned by the beam, to avoid a waste of resources of the terminal.

A first aspect of this application provides a beam measurement method.

A first satellite base station obtains a measurement event, where the measurement event includes a target time period, the target time period is determined based on location information of the terminal, ephemeris information of a second satellite base station, and a beam scanning rule of the second satellite base station, and a target beam of the second satellite base station scans the terminal in the target time period. The first satellite base station sends the measurement event to the terminal, where the measurement event is used by the terminal for measuring a target beam in the target time period, and the first satellite base station is a serving satellite base station of the terminal.

In this application, it can be determined, based on the location information of the terminal, the ephemeris information of the second satellite base station, and the beam scanning rule of the second satellite base station, that the terminal is located in a coverage range of the target beam of the second satellite base station. Based on this, the target time period in which the second satellite base station uses the target beam for scanning is determined, and the target time period is carried in the measurement event and sent to the terminal, so that the terminal can perform measurement only in the target time period. This ensures that the terminal can measure RSRP of the target beam, and the terminal does not need to perform measurement when the second satellite base station uses another beam for scanning, to avoid a waste of resources of the terminal.

In a possible implementation, the beam scanning rule includes a beam scanning direction, a beam scanning order, and a beam coverage range of the second satellite base station.

In this application, because the beam scanning rule includes the beam scanning direction, the beam scanning order, and the beam coverage range of the second satellite base station, accuracy of the target time period is ensured.

In a possible implementation, the measurement event further includes a frequency of a cell to which the target beam belongs, and the frequency is used by the terminal for measuring the target beam in the target time period.

In this application, the measurement event further includes the frequency of the cell to which the target beam belongs, to ensure that the terminal can measure the target beam.

In a possible implementation, the first satellite base station further receives the target time period from the second satellite base station, where the target time period is determined by the second satellite base station based on the location information of the terminal, the ephemeris information of the second satellite base station, and the beam scanning rule of the second satellite base station.

In this application, the target time period is obtained by the second satellite base station through calculation and then sent to the first satellite base station. Therefore, overheads of the first satellite base station are reduced.

In a possible implementation, the first satellite base station further determines the target time period based on the location information of the terminal, the ephemeris information of the second satellite base station, and the beam scanning rule of the second satellite base station.

In this application, the first satellite base station directly obtains the target time period through calculation. Therefore, overheads of the second satellite base station are reduced.

In a possible implementation, the first satellite base station and the second satellite base station are a same satellite base station, and the target beam does not belong to a serving cell of the terminal.

In this application, a scenario in which a corresponding terminal performs cell switching in a same satellite base station is also applicable, thereby improving flexibility of the solution.

A second aspect of this application provides a beam measurement method.

A terminal receives a measurement event from a first satellite base station, where the measurement event includes a target time period, the target time period is determined based on location information of the terminal, ephemeris information of a second satellite base station, and a beam scanning rule of the second satellite base station, a target beam of the second satellite base station scans the terminal in the target time period, and the first satellite base station is a serving satellite base station of the terminal. The terminal measures the target beam in the target time period based on the measurement event.

In this application, it can be determined, based on the location information of the terminal, the ephemeris information of the second satellite base station, and the beam scanning rule of the second satellite base station, that the terminal is located in a coverage range of the target beam of the second satellite base station. Based on this, the target time period in which the second satellite base station uses the target beam for scanning is determined, and the target time period is carried in the measurement event and sent to the terminal, so that the terminal can perform measurement only in the target time period. This ensures that the terminal can measure RSRP of the target beam, and the terminal does not need to perform measurement when the second satellite base station uses another beam for scanning, to avoid a waste of resources of the terminal.

In a possible implementation, the beam scanning rule includes a beam scanning direction, a beam scanning order, and a beam coverage range of the second satellite base station.

In this application, because the beam scanning rule includes the beam scanning direction, the beam scanning order, and the beam coverage range of the second satellite base station, accuracy of the target time period is ensured.

In a possible implementation, the measurement event further includes a frequency of a cell to which the target beam belongs, and the terminal measures the target beam in the target time period based on the frequency and the measurement event.

In this application, the measurement event further includes the frequency of the cell to which the target beam belongs, to ensure that the terminal can measure the target beam.

In a possible implementation, the first satellite base station and the second satellite base station are a same satellite base station, and the target beam does not belong to a serving cell of the terminal.

In this application, a scenario in which a corresponding terminal performs cell switching in a same satellite base station is also applicable, thereby improving flexibility of the solution.

A third aspect of this application provides a beam measurement method.

A second satellite base station determines a target time period based on location information of a terminal, ephemeris information of the second satellite base station, and a beam scanning rule of the second satellite base station, and the target beam of the second satellite base station scans the terminal in the target time period. The second satellite base station sends the target time period to a first satellite base station, so that the first satellite base station sends a measurement event to the terminal, where the measurement event includes the target time period, the measurement event is used by the terminal for measuring the target beam in the target time period, and the first satellite base station is a serving satellite base station of the terminal.

In this application, the second satellite base station can determine, based on the location information of the terminal, the ephemeris information of the second satellite base station, and the beam scanning rule of the second satellite base station, that the terminal is located in a coverage range of the target beam of the second satellite base station, determine, based on this, the target time period in which the second satellite base station scans the target beam, and send the target time period to the first satellite base station. In this way, the first satellite base station sends the measurement event carrying the target time period, so that the terminal can perform measurement only in the target time period. This ensures that the terminal can measure RSRP of the target beam, and does not need to perform measurement when the second satellite base station uses another beam for scanning, to avoid a waste of resources of the terminal.

A fourth aspect of this application provides a satellite base station, used as a first satellite base station, including:
a processing unit, configured to obtain a measurement event, where the measurement event includes a target time period, the target time period is determined based on location information of a terminal, ephemeris information of a second satellite base station, and a beam scanning rule of the second satellite base station, and a target beam of the second satellite base station scans the terminal in the target time period; and a transceiver unit, configured to send the measurement event to the terminal, where the measurement event is used by the terminal for measuring the target beam in the target time period, and the first satellite base station is a serving satellite base station of the terminal.

In a possible implementation, the beam scanning rule includes a beam scanning direction, a beam scanning order, and a beam coverage range of the second satellite base station.

In a possible implementation, the measurement event further includes a frequency of a cell to which the target beam belongs, and the frequency is used by the terminal for measuring the target beam in the target time period.

In a possible implementation, the transceiver unit is further configured to receive the target time period from the second satellite base station, where the target time period is determined by the second satellite base station based on the location information of the terminal, the ephemeris information of the second satellite base station, and the beam scanning rule of the second satellite base station.

In a possible implementation, the processing unit is further configured to determine the target time period based on the location information of the terminal, the ephemeris information of the second satellite base station, and the beam scanning rule of the second satellite base station.

In a possible implementation, the first satellite base station and the second satellite base station are a same satellite base station, and the target beam does not belong to a serving cell of the terminal.

A fifth aspect of this application provides a terminal, including:
a transceiver unit, configured to receive a measurement event from a first satellite base station, where the measurement event includes a target time period, the target time period is determined based on location information of the terminal, ephemeris information of a second satellite base station, and a beam scanning rule of the second satellite base station, a target beam of the second satellite base station scans the terminal in the target time period, and the first satellite base station is a serving satellite base station of the terminal; and a processing unit, configured to measure the target beam in the target time period based on the measurement event.

In a possible implementation, the beam scanning rule includes a beam scanning direction, a beam scanning order, and a beam coverage range of the second satellite base station.

In a possible implementation, the measurement event further includes a frequency of a cell to which the target beam belongs. The processing unit is specifically configured to measure the target beam in the target time period based on the measurement event and the frequency.

In a possible implementation, the first satellite base station and the second satellite base station are a same satellite base station, and the target beam does not belong to a serving cell of the terminal.

A sixth aspect of this application provides a satellite base station, used as a first satellite base station, including a processor and a memory, where the processor is coupled to the memory, the memory is configured to store instructions, and when the instructions are executed by the processor, the satellite base station device is enabled to perform the method in the first aspect.

A seventh aspect of this application provides a terminal, including a processor and a memory, where the processor is coupled to the memory, the memory is configured to store instructions, and when the instructions are executed by the processor, the terminal is enabled to perform the method in the second aspect.

An eighth aspect of this application provides a computer-readable storage medium, where the computer-readable storage medium stores computer instructions or a program, and when the computer instructions or the program is executed, a computer is enabled to perform the method according to the first aspect or the second aspect.

A ninth aspect of this application provides a computer program product, including computer instructions or a program, and when the computer instructions or the program is executed, a computer is enabled to perform the method in the first aspect or the second aspect.

### BRIEF DESCRIPTION OF DRAWINGS

FIG. 1 is a diagram of implementing coverage by a satellite base station by using a plurality of beams;
FIG. 2 is a diagram of a satellite base station in a high-speed moving state;
FIG. 3 is a diagram in which a terminal is located in a coverage range of a beam 5 of a neighboring satellite base station;
FIG. 4a is a diagram of a system architecture to which a beam measurement method according to this application is applied;
FIG. 4b is another diagram of a system architecture to which a beam measurement method according to this application is applied;
FIG. 4c is another diagram of a system architecture to which a beam measurement method according to this application is applied;
FIG. 5 is a schematic flowchart of a beam measurement method according to this application;
FIG. 6 is a diagram in which a terminal is located in a coverage range of a beam 5 of a neighboring satellite base station according to this application;
FIG. 7 is a diagram in which a terminal is located in a coverage range of a beam 10 of a neighboring cell according to this application;
FIG. 8 is a schematic flowchart of measuring, by a terminal, a beam of a neighboring satellite base station and switching to a cell of the neighboring satellite base station according to this application;
FIG. 9 is another schematic flowchart of measuring, by a terminal, a beam of a neighboring satellite base station and switching to a cell of the neighboring satellite base station according to this application;
FIG. 10 is a diagram of a structure of a first satellite base station according to this application;
FIG. 11 is a diagram of a structure of a terminal according to this application; and
FIG. 12 is another diagram of a structure of a first satellite base station or a terminal according to this application.

### DESCRIPTION OF EMBODIMENTS

The following describes embodiments of this application with reference to the accompanying drawings. It is clear that the described embodiments are merely some rather than all of the embodiments of this application. A person of ordinary skill in the art may know that with the development of technologies and emergence of new scenarios, the technical solutions provided in this application are also applicable to resolving similar technical problems.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions in embodiments of this application may be applied to various communication systems for data processing, for example, code division multiple access (code division multiple access, CDMA), time division multiple access (time division multiple access, TDMA), frequency division multiple access (frequency division multiple access, FDMA), orthogonal frequency-division multiple access (orthogonal frequency-division multiple access, OFDMA), single carrier frequency division multiple access (single carrier FDMA, SC-FDMA), and other systems. Terms "system" and "network" are interchangeable. The CDMA system may implement wireless technologies such as universal terrestrial radio access (universal terrestrial radio access, UTRA) and CDMA2000. The UTRA may include a wideband CDMA (wideband CDMA, WCDMA) technology and another variant technology of CDMA. CDMA2000 may cover the interim standard (interim standard, IS) 2000 (IS-2000), the IS-95 standard, and the IS-856 standard. The TDMA system may implement wireless technologies such as a global system for mobile communication (global system for mobile communication, GSM). The OFDMA system may implement wireless technologies such as evolved universal terrestrial radio access (evolved UTRA, E-UTRA), ultra mobile broadband (ultra mobile broadband, UMB), IEEE 802.11 (Wi-Fi), IEEE 802.16 (WiMAX), IEEE 802.20, and Flash OFDMA. The UTRA corresponds to a UMTS, and the E-UTRA corresponds to an evolved version of the UMTS. A new version of the UMTS that uses the E-UTRA is used in long term evolution (long term evolution, LTE) and various versions evolved based on LTE in 3GPP. A 5th generation (5th Generation, "5G" for short) communication system or new radio (New Radio, "NR" for short) is a next generation communication system under study. In addition, the communication system is further applicable to a future-oriented communication technology, and is applicable to the technical solutions provided in this application. System architectures and service scenarios described in this application are intended to describe the technical solutions in this application more clearly, and do not constitute a limitation on the technical solutions provided in this application. A person of ordinary skill in the art may learn that, with evolution of network architectures and emergence of new service scenarios, the technical solutions provided in this application are also applicable to similar technical problems.

The terminal in this application may be user equipment, an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a palmtop computer, a mobile internet device (mobile internet device, MID), an eMBB terminal, a URLLC terminal, an MTC terminal, an NB-IoT terminal, a CPE terminal, a VR terminal, an AR terminal, a V2X terminal, a wireless terminal in industrial control, a wireless terminal in self-driving, a wireless terminal in telemedicine, a wireless terminal in a smart grid, a wireless terminal in transportation safety, a wireless terminal in a smart city (smart city), a wireless terminal in a smart home (smart home), a sensor, a cellular phone, a cordless phone, a session initiation protocol (session initiation protocol, SIP) phone, a wireless local loop (wireless local loop, WLL) station, a personal digital assistant (personal digital assistant, PDA), a computing device or another processing device connected to a wireless modem, a vehicle-mounted terminal, a vehicle with a vehicle-to-vehicle (vehicle-to-vehicle, V2V) communication capability, an unmanned aerial vehicle with a capability of unmanned aerial vehicle (unmanned aerial vehicle, UAV) to unmanned aerial vehicle communication, a handhold device with a wireless communication function, a wearable device, a terminal device in a 5G network, a terminal device in a future evolved public land mobile network (public land mobile network, PLMN), or the like. This is not limited in this application.

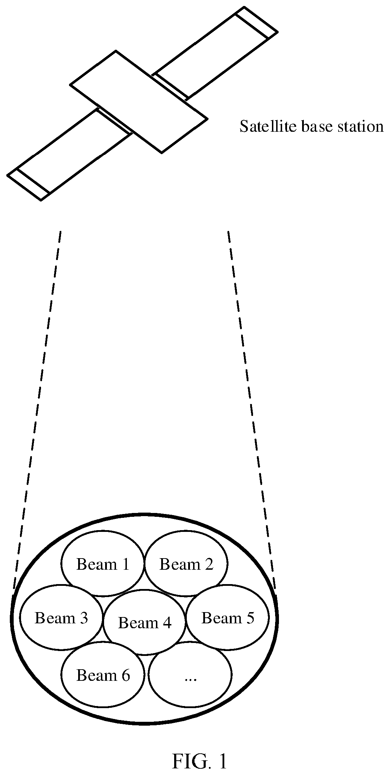

A satellite base station is a base station carried on a satellite. Satellite communication is implemented by deploying a large quantity of satellite base stations in low orbit and medium-high orbit to form a non-terrestrial network (non-terrestrial network, NTN), which can effectively meet network access requirements of people in remote areas such as deserts, oceans, and grasslands. Due to limited orbit and spectrum resources, and high costs of transmitting and maintaining in a satellite base station, a quantity of satellite base stations in an orbit is limited. Therefore, a single satellite base station is required to implement large-scale coverage, usually nearly hundreds of thousands of square kilometers. To ensure that the single satellite base station can achieve large-scale coverage, a distance between the satellite base station and a ground is very long. Even a low-orbit satellite base station is usually more than 200 kilometers away from the ground. As a result, a link loss reaches more than 150 dB. Refer to FIG. 1. To ensure a requirement of a demodulation threshold and link validity, a satellite base station needs to implement coverage by using a large quantity of beams.

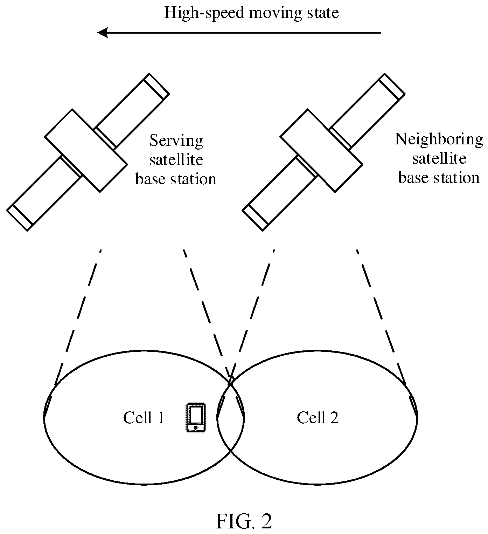

In addition, as shown in FIG. 2, because the satellite base station is always in a high-speed moving state, a terminal on the ground is under coverage of different satellite base stations at different moments. In a typical scenario, a coverage area of a single satellite base station is a cell. Therefore, the terminal needs to frequently perform cell switching, that is, switching an accessed satellite base station. The terminal needs to measure a beam of a neighboring satellite base station under an instruction of a serving satellite base station, that is, under an instruction of the accessed satellite base station, and can switch to a cell of the neighboring satellite base station only when RSRP of the beam of the neighboring satellite base station meets a preset condition.

In the conventional technology, a procedure in which a terminal measures a beam of a neighboring satellite base station and switches to the neighboring satellite base station is as follows.

301: The terminal enters an RRC connected state.

The terminal accesses a serving satellite base station, and enters the RRC connected state.

302: The serving satellite base station determines to deliver a measurement event to the terminal.

The serving satellite base station determines to deliver the measurement event to the terminal, so that the terminal measures the beam of the neighboring satellite base station. For example, when the terminal is already located at an edge of a cell of the serving satellite base station, the serving satellite base station determines to deliver the measurement event to the terminal.

303: The serving satellite base station delivers the measurement event to the terminal.

The serving satellite base station delivers the measurement event to the terminal, where the measurement event includes a frequency of a cell of the neighboring satellite base station.

304: The terminal measures the beam of the neighboring satellite base station based on the measurement event.

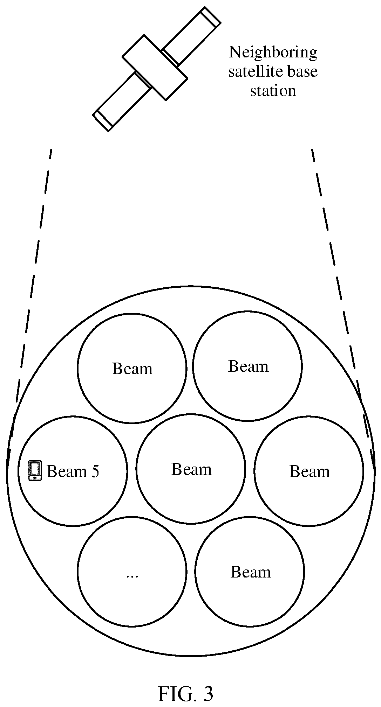

After receiving the measurement event, the terminal measures the beam of the neighboring satellite base station based on the frequency. For example, as shown in FIG. 3, in this case, the terminal is in a coverage range of a beam 5 of the neighboring satellite base station. However, because the satellite base station performs beam scanning in a time division manner, that is, sequentially uses different beams at different moments for scanning, the terminal needs to continuously perform measurement to ensure that the beam 5 is measured when the neighboring satellite base station uses the beam 5 for scanning.

305: The terminal reports a measurement result.

After measuring the beam 5, the terminal reports the measurement result to the serving satellite base station, where the measurement result is RSRP of the beam 5.

306: The serving satellite base station performs determining based on the measurement result.

The serving satellite base station performs determining based on the measurement result, and determines that the terminal accesses the cell of the neighboring satellite base station.

307: The serving satellite base station and the neighboring satellite base station complete switch preparation.

308: The serving satellite base station delivers a switch command to the terminal.

309: The terminal accesses the cell of the neighboring satellite base station based on the switch command.

It can be easily learned that, in step 304, when the neighboring satellite base station performs scanning by using a beam other than the beam 5, the neighboring satellite base station does not have any beam that can scan the terminal. Therefore, the terminal keeps performing measurement, causing a waste of resources of the terminal.

This application provides a beam measurement method and a related device, so that a terminal measures a beam of a neighboring cell only when the terminal is scanned by the beam, to avoid a waste of resources of the terminal.

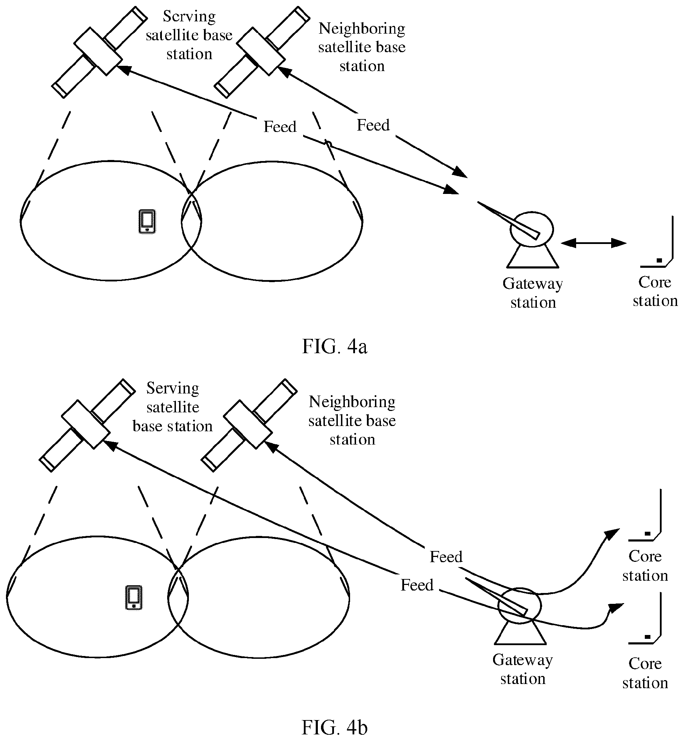

Refer to FIG. 4a. The following describes a system architecture to which a beam measurement method in this application is applied.

The system architecture includes a terminal, a serving satellite base station that serves the terminal, a neighboring satellite base station, a gateway station, and a core station. Coverage areas of the serving satellite base station and the neighboring satellite base station are two different cells. The serving satellite base station and the neighboring satellite base station are connected to the gateway station through feeding, and belong to the same core station. In the system architecture, as the terminal gradually moves away from a cell of the serving satellite base station, the terminal needs to switch to a cell of the neighboring satellite base station.

Refer to FIG. 4b. The following describes another system architecture to which the beam measurement method in this application is applied.

The system architecture also includes a terminal, a serving satellite base station that serves the terminal, a neighboring satellite base station, a gateway station, and core stations. Coverage areas of the serving satellite base station and the neighboring satellite base station are two different cells. The serving satellite base station and the neighboring satellite base station are connected to the gateway station through feeding. A difference lies in that the serving satellite base station and the neighboring satellite base station belong to different core stations. In the system architecture, as the terminal gradually moves away from a cell of the serving satellite base station, the terminal needs to switch to a cell of the neighboring satellite base station.

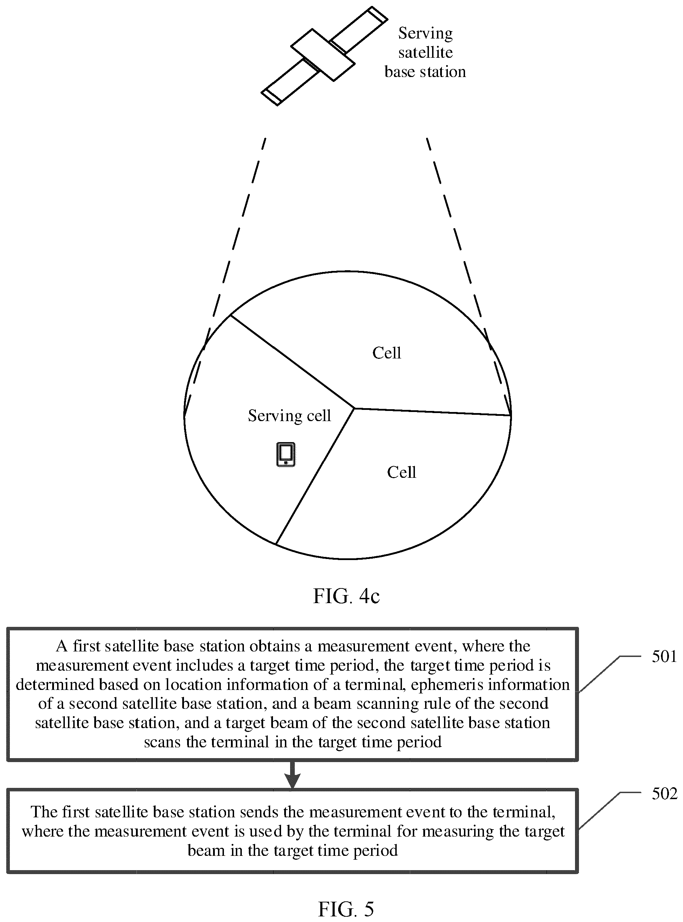

Refer to FIG. 4c. The following describes another system architecture to which the beam measurement method in this application is applied.

The system architecture includes a terminal and a serving satellite base station that serves the terminal, where a coverage area of the serving satellite base station is divided into a plurality of cells. In the system architecture, as the terminal gradually moves away from a serving cell, the terminal needs to switch to another cell of the serving satellite base station.

Refer to FIG. 5. The following describes a procedure of the beam measurement method in this application.

501: A first satellite base station obtains a measurement event, where the measurement event includes a target time period, the target time period is determined based on location information of a terminal, ephemeris information of a second satellite base station, and a beam scanning rule of the second satellite base station, and a target beam of the second satellite base station scans the terminal in the target time period.

This embodiment is applied to the system architecture shown in FIG. 4a or FIG. 4b. The first satellite base station is the serving satellite base station, and the second satellite base station is the neighboring satellite base station. At the beginning, the serving satellite base station provides a service for the terminal, and the terminal enters an RRC connected state. As the serving satellite base station moves, the terminal reaches an edge of a coverage area of the serving satellite base station. Therefore, the serving satellite base station determines to deliver the measurement event to the terminal, so that the terminal accesses a cell of the neighboring satellite base station.

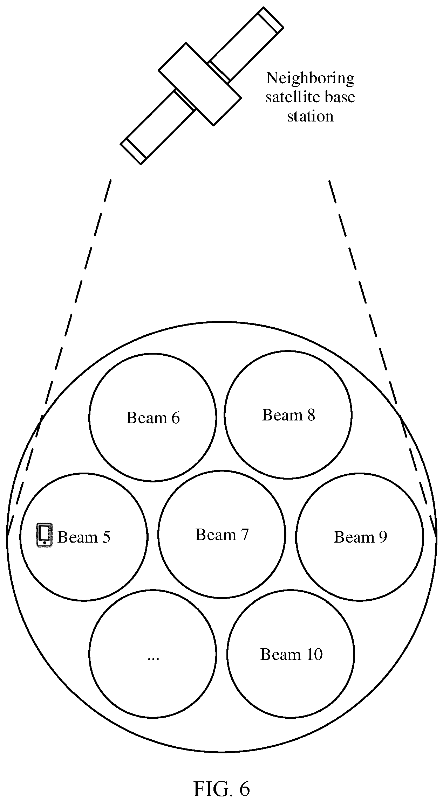

In a possible implementation, the serving satellite base station sends the location information of the terminal to the neighboring satellite base station. In addition, the neighboring satellite base station further locally obtains ephemeris information of the neighboring satellite base station and a beam scanning rule of the neighboring satellite base station. The location information of the terminal may be a GPS location, and the beam scanning rule includes a beam scanning direction, a beam scanning order, and a beam coverage range of the neighboring satellite base station. For example, as shown in FIG. 6, the neighboring satellite base station determines, based on the location information of the terminal, the ephemeris information of the neighboring satellite base station, and the beam scanning rule of the neighboring satellite base station, that the terminal is located in a coverage range of a beam 5 of the neighboring satellite base station, and further determines a time period in which the neighboring satellite base station uses the beam 5 for scanning. Optionally, because there may be an error in the location information of the terminal, that is, the terminal is actually not necessarily in the coverage range of the beam 5, to improve accuracy, the neighboring satellite base station may further estimate that the terminal is located in the coverage range of the beam 5 and coverage ranges of a beam 6 and a beam 7 that are around the beam 5. Therefore, the neighboring satellite base station determines the time period in which the beam 5 is used for scanning, a time period in which the beam 6 is used for scanning, and a time period in which the beam 7 is used for scanning. Then, the neighboring satellite base station sends the time periods to the serving satellite base station. After receiving the time periods, the serving satellite base station obtains a measurement event, where the measurement event includes the time periods and a frequency of the cell of the neighboring satellite base station.

Alternatively, the serving satellite base station determines the time periods based on a location of the terminal, the ephemeris information of the neighboring satellite base station, and the beam scanning rule of the neighboring satellite base station, and further obtains a measurement event that includes the time periods and a frequency of the cell of the neighboring satellite base station.

502: The first satellite base station sends the measurement event to the terminal, where the measurement event is used by the terminal for measuring the target beam in the target time period.

The serving satellite base station sends the measurement event to the terminal. If the measurement event includes the time period in which the neighboring satellite base station uses the beam 5 for scanning, after receiving the measurement event, the terminal performs measurement only in the time period based on the frequency, and does not need to perform measurement when the neighboring satellite base station uses another beam for scanning. Therefore, invalid measurement of the terminal is avoid when it is ensured that the terminal can measure RSRP of the beam 5 of the neighboring satellite base station. Similarly, if the measurement event includes the time period in which the neighboring satellite base station uses the beam 5 for scanning, the time period in which the neighboring satellite base station uses the beam 6 for scanning, and the time period in which the neighboring satellite base station uses the beam 7 for scanning, the terminal performs measurement only in the three time periods based on the frequency. If the terminal is actually located in a coverage range of the beam 6 of the neighboring satellite base station, the terminal can measure RSRP of the beam 6 of the neighboring satellite base station in the time period in which the neighboring satellite base station uses the beam 6 for scanning.

After completing the measurement, the terminal reports the RSRP of the beam that is obtained through measurement to the serving satellite base station, and the serving satellite base station determines, based on the RSRP of the beam that is reported by the terminal, whether the terminal needs to switch to the cell of the neighboring satellite base station.

In this application, it can be determined, based on the location information of the terminal, the ephemeris information of the second satellite base station, and the beam scanning rule of the second satellite base station, that the terminal is located in a coverage range of the target beam of the second satellite base station. Based on this, the target time period in which the second satellite base station uses the target beam for scanning is determined, and the target time period is carried in the measurement event and sent to the terminal, so that the terminal can perform measurement only in the target time period. This ensures that the terminal can measure RSRP of the target beam, and the terminal does not need to perform measurement when the second satellite base station uses another beam for scanning, to avoid a waste of resources of the terminal.

The beam measurement method in this application can be further applied to the system architecture shown in FIG. 4c. Refer to step A01 and step A02. The following describes another procedure of the beam measurement method in this application.

A01: A first satellite base station obtains a measurement event, where the measurement event includes a target time period, the target time period is obtained based on location information of a terminal, ephemeris information of a second satellite base station, and a beam scanning rule of the second satellite base station, and a target beam of the second satellite base station scans the terminal in the target time period.

Both the first satellite base station and the second satellite base station are serving satellite base stations. At the beginning, the serving satellite base station provides a service for the terminal, and the terminal enters an RRC connected state. As the serving satellite base station moves, the terminal reaches an edge of a serving cell. Therefore, the serving satellite base station determines to deliver the measurement event to the terminal, so that the terminal accesses another cell of the serving satellite base station.

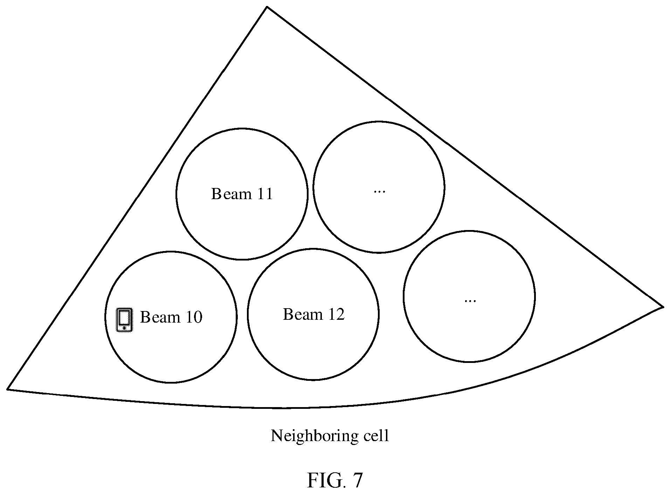

The serving satellite base station locally obtains the location information of the terminal, ephemeris information of the serving satellite base station, and a beam scanning rule of the serving satellite base station. For example, as shown in FIG. 7, the serving satellite base station determines, based on the location information of the terminal, the ephemeris information of the serving satellite base station, and the beam scanning rule of the serving satellite base station, that the terminal is located in a coverage range of a beam 10 of a neighboring cell, and further determines a time period in which the beam 10 is used for scanning. Optionally, because there may be an error in the location information of the terminal, that is, the terminal is actually not necessarily in the coverage range of the beam 10, to improve accuracy, the serving satellite base station may further estimate that the terminal is located in the coverage range of the beam 10 and coverage ranges of a beam 11 and a beam 12 that are around the beam 10. Therefore, the serving satellite base station determines the time period in which the beam 10 is used for scanning, a time period in which the beam 11 is used for scanning, and a time period in which the beam 12 is used for scanning. Then, the serving satellite base station obtains a measurement event that includes the time periods and a frequency of the neighboring cell.

A02: The first satellite base station sends the measurement event to the terminal, so that the terminal measures the target beam in the target time period.

The serving satellite base station sends the measurement event to the terminal. If the measurement event includes the time period in which the serving satellite base station uses the beam 10 for scanning, after receiving the measurement event, the terminal performs measurement only in the time period based on the frequency, and does not need to perform measurement when the serving satellite base station uses another beam for scanning. Therefore, invalid measurement of the terminal is avoid when it is ensured that the terminal can measure RSRP of the beam 10 of the serving satellite base station. Similarly, if the measurement event includes the time period in which the serving satellite base station uses the beam 10 for scanning, the time period in which the serving satellite base station uses the beam 11 for scanning, and the time period in which the serving satellite base station uses the beam 12 for scanning, the terminal performs measurement only in the three time periods based on the frequency. If the terminal is actually located in a coverage range of the beam 11 of the serving satellite base station, the terminal can measure RSRP of the beam 11 of the serving satellite base station in the time period in which the serving satellite base station uses the beam 11 for scanning.

After completing the measurement, the terminal reports the RSRP of the beam that is obtained through measurement to the serving satellite base station, and the serving satellite base station determines, based on the RSRP of the beam that is reported by the terminal, whether the terminal needs to switch to the neighboring cell.

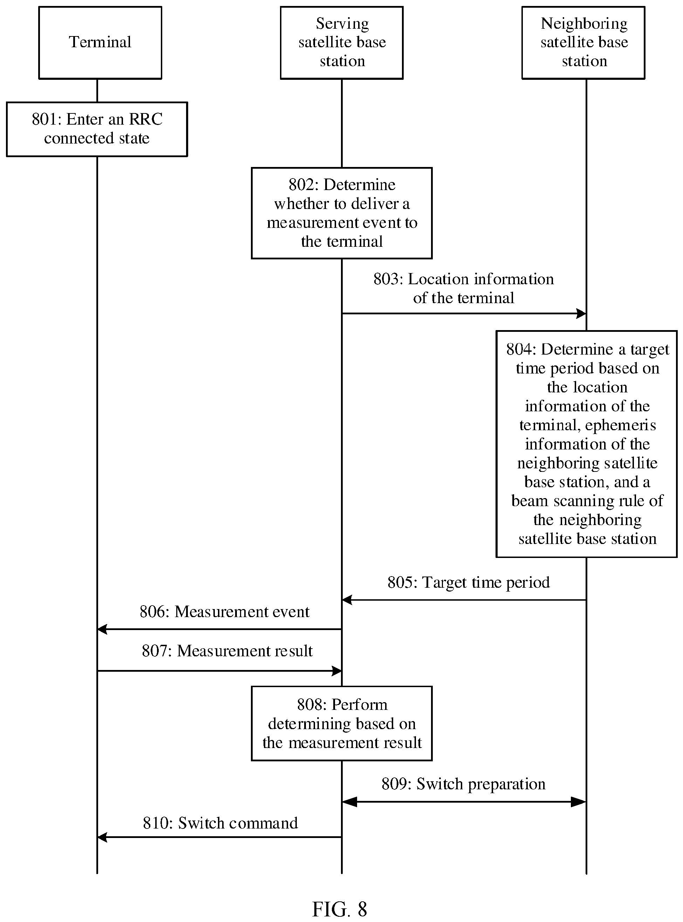

Refer to FIG. 8. With reference to the beam measurement method in this application, the following describes a procedure in which a terminal measures a beam of a neighboring satellite base station and switches to the neighboring satellite base station.

801: The terminal enters an RRC connected state.

The terminal accesses a serving satellite base station, and enters the RRC connected state.

802: The serving satellite base station determines to deliver a measurement event to the terminal.

When the terminal is located at an edge of a cell of the serving satellite base station, the serving satellite base station determines to deliver the measurement event to the terminal.

803: The serving satellite base station sends location information of the terminal to the neighboring satellite base station.

The serving satellite base station obtains the location information of the terminal, and sends the location information of the terminal to the neighboring satellite base station.

804: The neighboring satellite base station determines a target time period based on the location information of the terminal, ephemeris information of the neighboring satellite base station, and a beam scanning rule of the neighboring satellite base station.

The neighboring satellite base station receives the location information of the terminal from the serving satellite base station, locally obtains the ephemeris information of the neighboring satellite base station and the beam scanning rule of the neighboring satellite base station, and then determines the target time period based on the foregoing information. A target beam of the neighboring satellite base station scans the terminal in the target time period. For a specific case, refer to the embodiment shown in FIG. 5. Details are not described herein again.

805: The neighboring satellite base station sends the target time period to the serving satellite base station.

After obtaining the target time period, the neighboring satellite base station sends the target time period to the serving satellite base station.

806: The serving satellite base station sends the measurement event to the terminal.

After receiving the target time period from the neighboring satellite base station, the serving satellite base station obtains the measurement event, where the measurement event includes the target time period and a frequency of a cell of the neighboring satellite base station. Then, the serving satellite base station sends the measurement event to the terminal.

807: The terminal sends a measurement result to the serving satellite base station.

After receiving the measurement event from the serving satellite base station, the terminal starts measurement in the target time period based on the frequency of the cell of the neighboring satellite base station, to measure RSRP of the target beam. Then, the terminal sends the measurement result to the serving satellite base station, where the measurement result includes the RSRP of the target beam.

808: The serving satellite base station performs determining based on the measurement result.

After receiving a measurement report from the terminal, the serving satellite base station determines, based on the measurement report, that the terminal switches to the cell of the neighboring satellite base station.

809: The serving satellite base station and the neighboring satellite base station perform switch preparation.

The serving satellite base station communicates with the neighboring satellite base station, to prepare for switching of the terminal to the cell of the neighboring satellite base station.

810: The serving satellite base station sends a switch command to the terminal.

After the serving satellite base station and the neighboring satellite base station complete the switch preparation, the serving satellite base station sends the switch command to the terminal, and the terminal switches to the cell of the neighboring satellite base station based on the switch command.

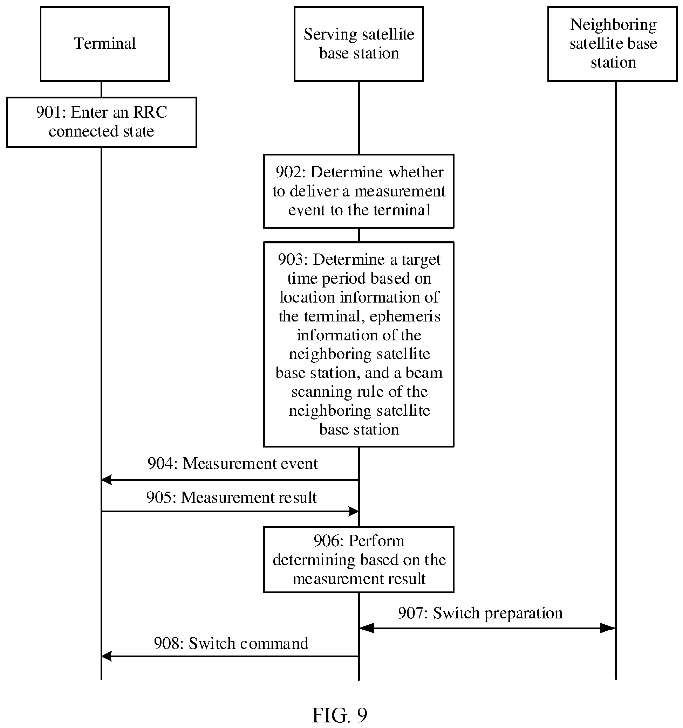

Refer to FIG. 9. With reference to the beam measurement method in this application, the following describes another procedure in which a terminal measures a beam of a neighboring satellite base station and switches to the neighboring satellite base station.

901: The terminal enters the RRC connected state.

The terminal accesses a serving satellite base station, and enters the RRC connected state.

902: The serving satellite base station determines to deliver a measurement event to the terminal.

When the terminal is located at an edge of a cell of the serving satellite base station, the serving satellite base station determines to deliver the measurement event to the terminal.

903: The serving satellite base station determines a target time period based on location information of the terminal, ephemeris information of the neighboring satellite base station, and a beam scanning rule of the neighboring satellite base station.

The serving satellite base station locally obtains the location information of the terminal, obtains the ephemeris information of the neighboring satellite base station and the beam scanning rule of the neighboring satellite base station, and then determines the target time period based on the foregoing information. A target beam of the neighboring satellite base station scans the terminal in the target time period. For a specific case, refer to the embodiment shown in step A01 and step A02. Details are not described herein again.

904: The serving satellite base station sends a measurement event to the terminal.

The serving satellite base station obtains the measurement event, where the measurement event includes the target time period and a frequency of a cell of the neighboring satellite base station. Then, the serving satellite base station sends the measurement event to the terminal.

905: The terminal sends a measurement report to the serving satellite base station.

After receiving the measurement event from the serving satellite base station, the terminal starts measurement in the target time period based on the frequency of the cell of the neighboring satellite base station, to measure RSRP of the target beam. Then, the terminal sends a measurement result to the serving satellite base station, where the measurement result includes the RSRP of the target beam.

906: The serving satellite base station performs determining based on the measurement result.

After receiving the measurement report from the terminal, the serving satellite base station determines, based on the measurement report, that the terminal switches to the cell of the neighboring satellite base station.

907: The serving satellite base station and the neighboring satellite base station perform switch preparation.

The serving satellite base station communicates with the neighboring satellite base station, to prepare for switching of the terminal to the cell of the neighboring satellite base station.

908: The serving satellite base station sends a switch command to the terminal.

After the serving satellite base station and the neighboring satellite base station complete the switch preparation, the serving satellite base station sends the switch command to the terminal, and the terminal switches to the cell of the neighboring satellite base station based on the switch command.

The foregoing describes the beam measurement method in this application. The following describes a device in this application.

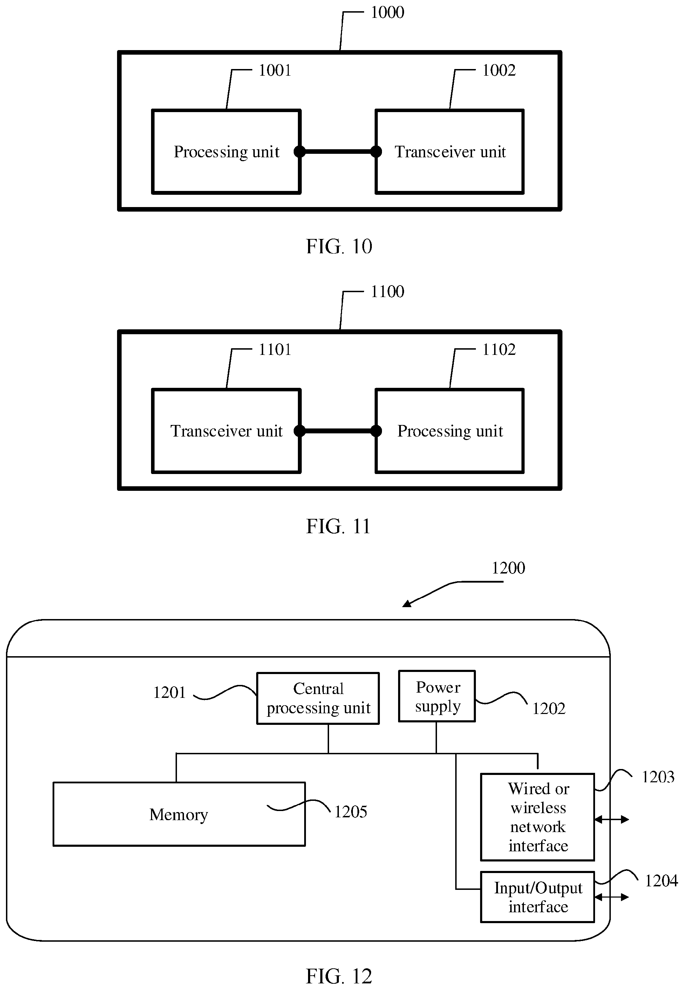

Refer to FIG. 10. This application provides a first network device 1000, including a processing unit 1001 and a transceiver unit 1002. The first network device 1000 is configured to perform operations performed by the first satellite base station in the foregoing embodiments.

The processing unit 1001 is configured to obtain a measurement event, where the measurement event includes a target time period, the target time period is determined based on location information of a terminal, ephemeris information of a second satellite base station, and a beam scanning rule of the second satellite base station, and a target beam of the second satellite base station scans the terminal in the target time period.

The transceiver unit 1002 is configured to send a measurement event to the terminal, where the measurement event is used by the terminal for measuring the target beam in the target time period, and the first satellite base station is a serving satellite base station of the terminal.

In a possible implementation, the beam scanning rule includes a beam scanning direction, a beam scanning order, and a beam coverage range of the second satellite base station.

In a possible implementation, the measurement event further includes a frequency of a cell to which the target beam belongs, and the frequency is used by the terminal for measuring the target beam in the target time period based on the frequency.

In a possible implementation, the transceiver unit 1002 is further configured to receive the target time period from the second satellite base station, where the target time period is determined by the second satellite base station based on the location information of the terminal, the ephemeris information of the second satellite base station, and the beam scanning rule of the second satellite base station.

In a possible implementation, the processing unit 1001 is further configured to determine the target time period based on the location information of the terminal, the ephemeris information of the second satellite base station, and the beam scanning rule of the second satellite base station.

In a possible implementation, the first satellite base station and the second satellite base station are a same satellite base station, and the target beam does not belong to a serving cell of the terminal.

Refer to FIG. 11. This application provides a terminal 1100, including a transceiver unit 1101 and a processing unit 1102. The terminal 1100 is configured to perform operations performed by the terminal in the foregoing embodiments.

The transceiver unit 1101 is configured to receive a measurement event from a first satellite base station, where the measurement event includes a target time period, the target time period is determined based on location information of the terminal, ephemeris information of a second satellite base station, and a beam scanning rule of the second satellite base station, a target beam of the second satellite base station scans the terminal in the target time period, and the first satellite base station is a serving satellite base station of the terminal.

The processing unit 1102 is configured to measure the target beam in the target time period based on the measurement event.

In a possible implementation, the beam scanning rule includes a beam scanning direction, a beam scanning order, and a beam coverage range of the second satellite base station.

In a possible implementation, the measurement event further includes a frequency of a cell to which the target beam belongs.

The processing unit 1102 is specifically configured to measure the target beam in the target time period based on the measurement event and the frequency.

In a possible implementation, the first satellite base station and the second satellite base station are a same satellite base station, and the target beam does not belong to a serving cell of the terminal.

FIG. 12 is a diagram of a structure of a device according to this application. The device is configured to implement the methods in the foregoing embodiments. The device may be a first satellite base station or a terminal. The device 1200 may include one or more central processing units (central processing units, CPU) 1201 and a memory 1205. The memory 1205 stores one or more application programs or data.

The memory 1205 may be a volatile memory or a persistent memory. The program stored in the memory 1205 may include one or more modules, and each module may include a series of instruction operations for a server. Further, the central processing unit 1201 may be configured to: communicate with the memory 1205, and perform, on the device 1200, the series of instruction operations in the memory 1205. The device 1200 may further include one or more power supplies 1202, one or more wired or wireless network interfaces 1203, one or more input/output interfaces 1204, and/or one or more operating systems.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

**In** addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (ROM, read-only memory), a random access memory (RAM, random access memory), a magnetic disk, or an optical disc.

## Claims

1. A beam measurement method, comprising:
obtaining, by a first satellite base station, a measurement event, wherein the measurement event comprises a target time period, the target time period is determined based on location information of a terminal, ephemeris information of a second satellite base station, and a beam scanning rule of the second satellite base station, and a target beam of the second satellite base station scans the terminal in the target time period; and
sending, by the first satellite base station, the measurement event to the terminal, wherein the measurement event is used by the terminal for measuring the target beam in the target time period, and the first satellite base station is a serving satellite base station of the terminal.

2. The method according to claim 1, wherein the beam scanning rule comprises a beam scanning direction, a beam scanning order, and a beam coverage range of the second satellite base station.

3. The method according to claim 1 or 2, wherein the measurement event further comprises a frequency of a cell to which the target beam belongs, and the frequency is used by the terminal for measuring the target beam in the target time period.

4. The method according to any one of claims 1 to 3, wherein the method further comprises:
receiving, by the first satellite base station, the target time period from the second satellite base station, wherein the target time period is determined by the second satellite base station based on the location information of the terminal, the ephemeris information of the second satellite base station, and the beam scanning rule of the second satellite base station.

5. The method according to any one of claims 1 to 3, wherein the method further comprises:
determining, by the first satellite base station, the target time period based on the location information of the terminal, the ephemeris information of the second satellite base station, and the beam scanning rule of the second satellite base station.

6. The method according to any one of claims 1 to 3 and 5, wherein the first satellite base station and the second satellite base station are a same satellite base station, and the target beam does not belong to a serving cell of the terminal.

7. A beam measurement method, comprising:
receiving, by a terminal, a measurement event from a first satellite base station, wherein the measurement event comprises a target time period, the target time period is determined based on location information of the terminal, ephemeris information of a second satellite base station, and a beam scanning rule of the second satellite base station, a target beam of the second satellite base station scans the terminal in the target time period, and the first satellite base station is a serving satellite base station of the terminal; and
measuring, by the terminal, the target beam in the target time period based on the measurement event.

8. The method according to claim 7, wherein the beam scanning rule comprises a beam scanning direction, a beam scanning order, and a beam coverage range of the second satellite base station.

9. The method according to claim 7 or 8, wherein the measurement event further comprises a frequency of a cell to which the target beam belongs; and
the measuring, by the terminal, the target beam in the target time period based on the measurement event comprises:
measuring, by the terminal, the target beam in the target time period based on the measurement event and the frequency.

10. The method according to any one of claims 7 to 9, wherein the first satellite base station and the second satellite base station are a same satellite base station, and the target beam does not belong to a serving cell of the terminal.

11. A satellite base station, used as a first satellite base station, comprising:
a processing unit, configured to obtain a measurement event, wherein the measurement event comprises a target time period, the target time period is determined based on location information of a terminal, ephemeris information of a second satellite base station, and a beam scanning rule of the second satellite base station, and a target beam of the second satellite base station scans the terminal in the target time period; and
a transceiver unit, configured to send the measurement event to the terminal, wherein the measurement event is used by the terminal for measuring the target beam in the target time period, and the first satellite base station is a serving satellite base station of the terminal.

12. The satellite base station according to claim 11, wherein the beam scanning rule comprises a beam scanning direction, a beam scanning order, and a beam coverage range of the second satellite base station.

13. The satellite base station according to claim 11 or 12, wherein the measurement event further comprises a frequency of a cell to which the target beam belongs, and the frequency is used by the terminal for measuring the target beam in the target time period.

14. The satellite base station according to any one of claims 11 to 13, wherein
the transceiver unit is further configured to receive the target time period from the second satellite base station, wherein the target time period is determined by the second satellite base station based on the location information of the terminal, the ephemeris information of the second satellite base station, and the beam scanning rule of the second satellite base station.

15. The satellite base station according to any one of claims 11 to 13, wherein
the processing unit is further configured to determine the target time period based on the location information of the terminal, the ephemeris information of the second satellite base station, and the beam scanning rule of the second satellite base station.

16. The satellite base station according to any one of claims 11 to 13 and 15, wherein the first satellite base station and the second satellite base station are a same satellite base station, and the target beam does not belong to a serving cell of the terminal.

17. A terminal, comprising:
a transceiver unit, configured to receive a measurement event from a first satellite base station, wherein the measurement event comprises a target time period, the target time period is determined based on location information of the terminal, ephemeris information of a second satellite base station, and a beam scanning rule of the second satellite base station, a target beam of the second satellite base station scans the terminal in the target time period, and the first satellite base station is a serving satellite base station of the terminal; and
a processing unit, configured to measure the target beam in the target time period based on the measurement event.

18. The terminal according to claim 17, wherein the beam scanning rule comprises a beam scanning direction, a beam scanning order, and a beam coverage range of the second satellite base station.

19. The terminal according to claim 17 or 18, wherein the measurement event further comprises a frequency of a cell to which the target beam belongs; and
the processing unit is specifically configured to measure the target beam in the target time period based on the measurement event and the frequency.

20. The terminal according to any one of claims 17 to 19, wherein the first satellite base station and the second satellite base station are a same satellite base station, and the target beam does not belong to a serving cell of the terminal.

21. A satellite base station, used as a first satellite base station and comprising a processor and a memory, wherein the processor is coupled to the memory, the memory is configured to store instructions, and when the instructions are executed by the processor, the satellite base station is enabled to perform the method according to any one of claims 1 to 6.

22. A terminal, comprising a processor and a memory, wherein the processor is coupled to the memory, the memory is configured to store instructions, and when the instructions are executed by the processor, the terminal is enabled to perform the method according to any one of claims 7 to 10.

23. A computer-readable storage medium, wherein the computer-readable storage medium stores computer instructions or a program, and when the computer instructions or the program is executed by a processor, a computer is enabled to perform the method according to any one of claims 1 to 10.

24. A computer program product, comprising computer instructions or a program, wherein when the computer instructions or the program is executed by a processor, a computer is enabled to perform the method according to any one of claims 1 to 10.
